Europäisches Patentamt

European Patent Office

Office européen des brevets

(19)

(11) Veröffentlichungsnummer : **0 458 782 B1**

## (12) EUROPÄISCHE PATENTSCHRIFT

(45) Veröffentlichungstag der Patentschrift :
**26.10.94 Patentblatt 94/43**

(51) Int. Cl.[5] : **H04L 12/44, H04B 10/20**

(21) Anmeldenummer : **89902385.7**

(22) Anmeldetag : **20.02.89**

(86) Internationale Anmeldenummer :
**PCT/EP89/00156**

(87) Internationale Veröffentlichungsnummer :
**WO 90/09710 23.08.90 Gazette 90/20**

(54) **STERNFÖRMIGES NETZ FÜR DIE DATENKOMMUNIKATION ZWISCHEN STATIONEN.**

(43) Veröffentlichungstag der Anmeldung :
**04.12.91 Patentblatt 91/49**

(45) Bekanntmachung des Hinweises auf die
Patenterteilung :
**26.10.94 Patentblatt 94/43**

(84) Benannte Vertragsstaaten :
**DE FR GB**

(56) Entgegenhaltungen :
**EP-A- 0 173 508**
**EP-A- 0 292 072**
**DE-A- 3 305 115**
**DE-A- 3 503 364**

(56) Entgegenhaltungen :
**New Electronics, Band 16, Nr. 12, 14. Juni
1983, (London, GB), Seite 19; L. Hunt: "First in'
signal switch isolator"**
**Journal of Lightwave Technology, Band LT-3,
Nr. 3, Juni 1985, IEEE (New York, US), Seiten
426-431; S.D. Personick: "Protocols for fi-
ber-optic local area network"**

(73) Patentinhaber : **Licentia
Patent-Verwaltungs-GmbH
Theodor-Stern-Kai 1
D-60596 Frankfurt (DE)**

(72) Erfinder : **POPP, Wolfgang, Dr.-Ing.
Mangoldweg 34
D-6100 Darmstadt (DE)**

(74) Vertreter : **Erbacher, Alfons, Dipl.-Ing. et al
Licentia Patent-Verwaltungs-GmbH
Theodor-Stern Kai 1
D-60596 Frankfurt (DE)**

EP 0 458 782 B1

## Beschreibung

Die Erfindung bezieht sich auf ein sternförmiges Netz für die Informationsübertragung zwischen Stationen, wobei an Verzweigungsstellen des Netzes Sternkoppler vorgesehen sind.

Datenkommunikationsnetze können passive und/oder aktive Sternkoppler zwischen Kommunikationskanälen enthalten.

Zum Aufbau optischer Datennetze lassen sich z. B. passive Sternkoppler verwenden. Ein Sternkoppler ist passiv, wenn er keine verstärkenden oder regenerierenden Elemente enthält, also auch keine elektrische Energie benötigt. Die Aufteilung der mit den optischen Datenströmen verknüpften optischen Leistung erfolgt auf rein optische Weise. Der Sternkoppler hat n Tore, wobei jedes Tor je einen Eingang und je einen Ausgang hat. Insgesamt besitzt der Sternkoppler also ebensoviele Eingänge wie Ausgänge.

Jede einzelne Station des Netzes ist durch je zwei Lichtwellenleiter, im folgenden LWL genannt, mit dem Sternkoppler verbunden, von denen der eine LWL die Sende- und der andere die Empfangsdaten der Station überträgt. Je einem Paar dieser zwei LWL ist je eines der Tore des Sternkopplers zugeordnet. Die Anzahl der Tore des Sterns und der Stationen des Netzes ist also identisch. Die von einem LWL in den Eingang eines Tores eingekoppelten Signale der Leistung P werden zu etwa gleichen Teilen, die in der Grössenordnung P/n liegen (ohne Berücksichtigung der inneren Koppelverluste), auf die einzelnen Ausgänge des Sternkopplers aufgeteilt. Von hier aus werden die optischen Signale über je einen der n LWL zu je einem Empfänger der n Stationen des Netzes übertragen.

Der Ausgang des Tores, über dessen Eingang die Signale eingekoppelt werden, enthält also die gleiche Leistung wie die Ausgänge der anderen Tore. Sternkoppler, wie der beschriebene, sollen im folgenden als "symmetrisch" bezeichnet werden, wenn

1. die Anzahl der Eingänge gleich der Anzahl der Ausgänge ist,
2. die in den Eingang eines beliebigen Tores X eingekoppelte optische Leistung gleichmässig auf die Ausgänge aller Tore, also auch auf den Ausgang des Tores X, verteilt wird.

Wesentlich ist, dass die maximale Netzreichweite, also der maximale Abstand zweier Stationen, $L_{max}$, von der Anzahl der Tore des Sternkopplers, also der Stationszahl des Netzes, bestimmt wird.

Zum Aufbau optischer Datennetze lassen sich auch symmetrische aktive Sternkoppler verwenden, wobei sinngemäss die gleiche Definition der Symmetrie gilt. Ein solcher Sternkoppler hat n Tore, wobei jedes Tor je einen Eingang (mit einem optischen Empfänger) und einen Ausgang (mit einem optischen Sender) hat. Insgesamt besitzt der Sternkoppler also ebensoviele Eingänge wie Ausgänge. Ein solcher Sternkoppler wird im folgenden - analog zu dem entsprechenden passiven Typ - "symmetrischer aktiver Sternkoppler" genannt.

Die Eigenschaft "symmetrisch" besitzt er, weil er ebensoviele Eingänge wie Ausgänge hat und weil jedem Ausgang, auch dem Ausgang des Tores, in dessen Eingang die optischen Signale eingekoppelt wurden, die gleiche Signalleistung zugeteilt wird; die Eigenschaft "aktiv" besitzt er, weil alle eintreffenden optischen Signale in elektrische Signale umgesetzt, bezüglich des Pegels oder auch des Zeitverhaltens regeneriert, in einer elektronischen Schaltung auf alle Ausgänge verteilt und dort in optische Signale rückgewandelt werden und weil hierzu elektrische Energie benötigt wird.

Wesentlich ist, dass die maximale Netzreichweite, also der maximale Abstand zweier Stationen, $L_{max}$, bei Verwendung eines aktiven Sternkopplers unabhängig von der Anzahl der Stern-Tore, also der Stationszahl, ist.

Es können auch Netze mit aktiven und passiven Sternkopplern aufgebaut werden. Passive Sternkoppler haben eine hohe Ausfallsicherheit, eignen sich jedoch nur für Netze mit begrenzter Reichweite und Stationszahl. Aktive Sternkoppler sind für Netze mit sehr grosser Reichweite und zahlreichen Teilnehmern geeignet. Sie enthalten zahlreiche opto-elektrische Umsetzer und Elektronik, was sie im allgemeinen gegenüber passiven Sternkopplern teurer macht. Ausserdem sind zusätzliche Massnahmen zur Ausfallsicherheit notwendig.

Beim Aufbau flächendeckender Netze mit grossen Teilnehmerzahlen und Reichweiten ist es wegen der erwähnten Nachteile nicht vernünftig, ausschliesslich einen aktiven Sternkoppler zu verwenden, obwohl dies prinzipiell möglich wäre: Ein einziger aktiver Sternkoppler, mit dem alle Stationen des Netzes verbunden sind, würde in diesem Fall nicht nur einen hohen Aufwand für die Ausfallsicherheit, sondern auch einen hohen Aufwand an Kabelkosten zur Folge haben: Mehrere Stationen z. B., die dicht nebeneinander liegen und Cluster bilden, müssten jeweils auf individuellen LWL-Kabeln mit dem weitentfernten aktiven Sternkoppler verbunden werden.

Beim Aufbau grosser Netze ist es sinnvoller, mehrere Sternkoppler zu verwenden, und zwar nicht nur aktive sondern auch passive, um deren Vorteile auch miteinzubeziehen: Mehrere Stationen werden in Gruppen von typischerweise 8, eventuell auch mehr, z. B. 16 oder 32 Stationen, durch einen passiven Sternkoppler miteinander verbunden. Mehrere dieser Subnetze mit passiven Sternkopplern werden durch aktive Sternkoppler miteinander verbunden. Mehrere dieser Art gebildeter Netze mit aktiven Sternkopplern werden ihrerseits in Gruppen von z. B. 8 Netzen jeweils durch passive Sternkoppler miteinander verbunden usw. Man erhält auf diese Weise ein Netz kaskadierter aktiver und passiver Sternkoppler, das in seinen Ausmassen bequem der Zunahme des Datenaufkommens und dem Wachstum der Stationszahlen, z.B. eines industriellen Automatisierungssystems, angepasst werden kann.

Beim Aufbau solcher Netze mit kaskadierten aktiven und passiven Sternkopplern muss jedoch ein wesentliches Problem gelöst werden:

Es muss verhindert werden, dass das von einem Sender ausgesandte Telegramm irgendeinen der Empfänger der angeschlossenen Stationen auf unterschiedlichen, mehreren Wegen, also mehrere Male hintereinander erreichen kann. Dies passiert zwangsläufig, wenn man zum Netzaufbau die oben beschriebenen symmetrischen passiven und symmetrischen aktiven Sternkoppler gleichzeitig, d. h. gemeinschaftlich benutzt.

Ein Netzaufbau mit gleichzeitigem Einsatz von symmetrischen aktiven und symmetrischen passiven Sternkopplern ist also funktionsunfähig.

Dieses Problem kann durch Netztypen mit unsymmetrischen aktiven und passiven Sternkopplern sowie einem einzigen symmetrischen aktiven oder passiven Sternkoppler gelöst werden. Hierzu werden Splitter und Combiner eingesetzt, bei denen es sich um spezielle Ausführungen des allgemeinen Sternkopplers handelt:
- Der Splitter besitzt einen Eingang und n Ausgänge, er teilt das in seinem Eingang eintreffende Licht gleichmässig auf seine n Ausgangstore auf.
- Der Combiner besitzt n Eingänge und einen Ausgang; er koppelt jedes in einem seiner n Eingänge eintreffende Licht-Signal auf den gemeinsamen Ausgang über.

Es handelt sich bei Splittern und Combinern um unsymmetrische Sternkoppler. Sie können als passive oder aktive Bauelemente realisiert werden.

Als passive Bauelemente werden sie von zahlreichen Herstellern angeboten. Bei einem passiven Splitter bzw. Combiner liegt das Verhältnis zu eingekoppelter Leistung $P_E$ zu ausgekoppelter Leistung PA in der Grössenordnung von

$$P_E/P_A \ = \ n$$

wobei n die Anzahl der Splitter-Ausgänge bzw. Combiner Eingänge ist und interne Verluste unberücksichtigt sind. Hieraus resultiert die im Prinzip gleiche Abhängigkeit zwischen maximaler Stationenzahl und Reichweite eines Netzes bei Verwendung von Splittern bzw. Combinern und symmetrischen passiven Sternkopplern.

Bei aktiven Splittern und Combinern beruht die Wirkungsweise - wie bei aktiven symmetrischen Sternkopplern - darauf, dass das eintreffende optische Signal in einen optischen Empfänger in ein elektrisches Signal umgesetzt, elektrisch auf den Ausgang oder die Ausgänge verteilt und gegebenenfalls regeneriert wird und im Ausgang wieder in einem optischen Sender in ein optisches Signal rückumgesetzt wird. Maximale Reichweite und Teilnehmerzahl eines Netzes mit aktiven Splittern oder Combinern sind miteinander nicht korreliert. Bezüglich der Vor- und Nachteile von passiven und aktiven Splittern und Combinern gelten die gleichen Angaben wie für symmetrische Sternkoppler. In diesem Zusammenhang sei besonders auf die Probleme der Ausfallsicherheit bei aktiven Splittern und Combinern hingewiesen. Je ein Splitter mit n Ausgängen und ein Combiner mit n Eingängen lässt sich paarweise zu einem sogenannten "Splitter/Combiner" zusammenfassen.

Ein Splitter/Combiner ist wiederum eine Sonderform eines Sternkopplers. Er besitzt ebensoviele Eingänge wie Ausgänge, er ist aber trotzdem kein symmetrischer Sternkoppler - im Sinn obiger Definition, weil das in irgendeinem seiner Eingänge eingekoppelte Licht nicht gleichmässig auf alle vorhandenen Ausgänge verteilt wird: Denn das z. B. in Eingang n+1 eingekoppelte Licht mag zwar gleichmässig auf die Ausgänge 1 bis n verteilt werden; Ausgang n+1 erhält kein Licht. Koppelt man Licht an einen der Eingänge 1 bis n ein, erhält nur Ausgang n+1 Licht, während keiner der Ausgänge 1 bis n Licht erhält. Splitter/Combiner kommen sowohl in aktiver wie in passiver Ausführung zum Einsatz. Beim Netzaufbau dienen Splitter/Combiner zur gruppenweisen Zusammenfassung von Stationen oder Subnetzen (Teilnetzen). Beim Prinzip der gruppenweisen Zusammenfassung in Stationen bzw. Subnetzen gelangt man schliesslich zum höchsten Punkt in der auf diese Weise gebildeten Netzhierarchie. In diesen höchsten Punkt kommt ein symmetrischer Sternkoppler zum Einsatz, entweder ein passiver oder aktiver, je nachdem, ob die Sternkoppler (Splitter/Combiner) auf der darunterliegenden Ebene aktiv oder passiv realisiert sind.

Splitter/Combiner dienen auf allen Ebenen der Netzhierarchie der gruppenweisen Zusammenfassung der Aufteilung der Datenströme. In den einzelnen Hierarchieebenen folgen passive und aktive Splitter/Combiner abwechselnd aufeinander.

Alle von "unten", d. h. einer unteren Ebene kommenden Datenströme können nur nach oben weitergereicht werden, nie aber unmittelbar nach unten zu anderen Stationen oder Subnetzen auf der gleichen oder einer tiefer liegenden Ebene. Umgekehrt werden Datenströme, die von oben kommen, nur nach unten, niemals aber nach oben zurückgereicht. In diesem Sinn wird hier auch von einem "Up-stream"- bzw. einem "Down-stream"-Datenfluss gesprochen. Die eigentliche "Drehscheibe", in der der Datenfluss von Upstream auf Downstream umgeleitet wird, ist die höchste Stelle des Netzwerks, in dem als "Loop-back-point" (Rückkoppel-Punkt) ein symmetrischer Sternkoppler wirkt. Dieser koppelt - in Übereinstimmung mit obiger Definition alle an einem Eingang eintreffenden Signale gleichmässig auf alle Ausgänge über, auch auf den Ausgang des Tores, durch dessen Eingang die Signale eingetreten sind. Für das Netzwerk ist entscheidend, dass nur ein einziger symmetrischer Sternkoppler existiert.

Durch die oben beschriebene Struktur werden Signalkreisströme verhindert, weil der Empfänger ein ausgesandtes Telegramm in der Tat nur ein einziges Mal erhält.

Ein Telegramm, dass in einer der Stationen zu einer unmittelbar benachbarten Station im selben Cluster geschickt werden soll, kann diese Station nicht auf dem kürzesten Weg erreichen, sondern muss zunächst sämtliche Ebenen der Netzwerkhierarchie "upstream" durchlaufen, muss an der höchsten Stelle gewendet werden und dann wieder alle Ebenen des Netzwerkes "downstream" durchlaufen bis es schliesslich die Bestimmungsstation erreicht. Nimmt man an, dass die Empfangsstation einen geringen Abstand von der Sendestation hat, dass aber die zurückgelegte LWL-Strecke vielleicht 3 km betragen mag, zieht man in Betracht, dass das Telegramm auf seinem "up"- und "down-stream" Weg weitere ausfallgefährdete aktive Splitter/Combiner oder auch zusätzlich den ausfallgefährdeten aktiven Sternkoppler an der Netzwerkspitze (dem Loop-back-point) durchlaufen muss, dann ergeben sich eine Fülle von Gefährdungen und Verfälschungsmöglichkeiten für die Datenübertragung, die angesichts der unmittelbaren Nachbarschaft der beiden kommunizierenden Stationen einfach als absurd bezeichnet werden muss.

Die Kommunikation zwischen Stationen, die funktional zusammenhängen, bricht zusammen, wenn auch nur eine einzige der vielen übergeordneten Netzebenen oder der sie verbindenden Komponenten, z. B. eine weit entfernte Komponente in der Nähe von oder um den "Loop-back-point" des Netzes, ausfällt.

Der zweite Nachteil ist ökonomischer Art: lokale Netzwerke (LANs) sollen flexibel sein, d. h. z. B. sie sollen mit der Zunahme der Teilnehmerstationen mitwachsen können. Hat man ein Netz mit z. B. zunächst nur 8 Stationen zu installieren, wird man diese 8 Stationen mit einem symmetrischen passiven Sternkoppler verbinden. Wächst die Stationszahl auf z.B. 16 an, so kann man je 8 Stationen mit einem passiven Splitter/Combiner zusammenfassen und die beiden entstandenen Subnetze ihrerseits mit einem aktiven Sternkoppler verbinden. D. h. aber: der vorher angeschaffte und eingesetzte passive symmetrische Sternkoppler ist im erweiterten Netz überflüssig.

Bekannt ist ein anderes Übertragungsnetzwerk mit einer Anzahl entfernt voneinander angeordneter Datenendstellen, die über Übertragungsleitungen und Knotenpunkte miteinander verbunden sind. Jeder Knotenpunkt enthält eine Anzahl Eingangstore und die gleiche Anzahl Ausgangstore sowie einen Prozessor. Die Eingangstore werden vom Prozessor zyklisch nacheinander abgetastet. Wenn an einem Eingangstor ein Signal durch die Abtastung festgestellt wird, dann wird die Abtastung der anderen Eingangstore für eine gewisse Zeit unterbrochen. Die über den jeweiligen Eingang empfangenen Signale werden unter Kontrolle des Prozessors an ein Ausgangstor oder an mehrere Ausgangstore weitergeleitet (DE-A-33 05 115).

Ein bekannter aktiver Sternkoppler für Netze mit verdrillten Zweidrahtleitungen enthält eine Reihe von Toren, die jeweils nur an eine bidirektional betriebene Übertragungsleitung angeschlossen sind. Die Tore weisen keine getrennten Ein- und Ausgänge auf. Das in ein beliebiges Tor eingekoppelte Signal wird auf alle anderen Tore unmittelbar Übertragen, so dass auf den mit diesen Toren verbundenen Übertragungsleitungen keine Signale in Richtung des Sternkopplers übertragen werden dürfen. Der Empfang der von Sendesignalen beaufschlagten Tore wird bei diesem Sternkoppler blockiert (EP-A-0 292 072).

Schliesslich ist ein Sternkoppler bekannt, der eine Reihe von Eingangstoren aufweist, die je eine Schaltung aufweisen, mit der sichergestellt wird, dass der Sternkoppler nicht mehr als an einem Empfänger gleichzeitig Daten empfängt (New electronics, Vol. 16, June 1983, S. 19).

Der Erfindung liegt die Aufgabe zugrunde, das eingangs beschriebene Netz derart weiterzuentwickeln, dass im Netz symmetrische, passive Sternkoppler und unsymmetrische aktive Sternkoppler eingesetzt werden können, ohne dass die von einer beliebigen Station gesendeten Daten die gleichen Empfänger auf mehreren, unterschiedlichen Wegen hintereinander erreichen.

Die Aufgabe wird erfindungsgemäss dadurch gelöst, dass das Netz hierarchisch in verschiedene Ebenen gegliedert ist, die durch gruppenweise Zusammenfassung einzelner Stationen oder Subnetze wechselweise mit symmetrischen passiven und unsymmetrischen aktiven Sternkopplern gebildet werden, dass in der unteren Ebene passive, symmetrische Sternkoppler vorgesehen sind, denen die Stationen nachgeschaltet sind, dass jeder aktive Sternkoppler (1) Tore mit je einem Empfänger und einem Sender aufweist, dass bei jedem Tor des aktiven Sternkopplers (1) dem Empfänger ein Schaltelement nachgeschaltet ist, das durch dem Sender (7) des Tors zugeführte Signale nichtleitend steuerbar ist, und dass bei jedem Tor des aktiven Sternkopplers der Empfänger nur mit den Sendern der anderen Tore verbunden ist.

Vorteilhafte Weiterbildungen der Erfindung sind in den Ansprüchen 2 bis 6 beschrieben.

Bei den aktiven Sternkopplern kommen also nur unsymmetrische Typen zum Einsatz, die folgende Eigenschaften A und B aufweisen:

A Das in den Eingang eines beliebigen Tores X eingekoppelte Signal soll stets nur an die Ausgänge aller anderen Tore ausser X unmittelbar übertragen werden.

B Die in die Ausgänge der verschiedenen Tore übertragenen Signale (Telegramme) sollen für die Dauer T des Signals (Telegramms) und einer bestimmten Zeit T darüberhinaus jeden eventuellen über den Empfänger E des betreffenden Tores einlaufenden Datenstrom unterbrechen - durch eine Rückflusssperre.

Die Erfindung hat folgende Vorteile: Ein Telegramm, das von einer Station zu einer unmittelbar benachbarten Station ausgesandt wird, erreicht diese auf dem kürzesten Weg über den gemeinsamen passiven Sternkoppler, der in der untersten Ebene der Netztopologie eingesetzt wird. Es entfällt deshalb die Fülle an Beeinträchtigungsmöglichkeiten, wie wenn der Signalstrom sämtlichen übergeordneten Hierarchieebenen und deren verbindende Komponenten durchlaufen muss, wie zu dem ersten erwähnten Netztyp dargelegt wurde. Das ganze Netzwerk oberhalb des passiven Sternkopplers kann sogar zusammenbrechen: trotzdem werden die einzelnen Stationen innerhalb ihrer "Inseln", d. h. Subnetze, ihre Kommunikation aufrechterhalten können. Die passiven Sternkoppler besitzen weder Elektronik noch "Intelligenz" und verteilen nur die ankommenden Telegramme auf ihre Ausgänge. Sie sind deshalb betriebssicher und preiswert. Die aktiven Sternkoppler haben einen einfachen Aufbau mit wenig "Intelligenz". Der Mischaufbau von Netzen mit aktiven und passiven Sternkopplern führt deshalb auch zu Netzen, die insgesamt zuverlässiger arbeiten. Ein weiterer wesentlicher Vorteil ist wirtschaftlicher Art bei Local Area Netzworks (LANs). Der vielfach geforderten LAN-Eigenschaft "Flexibilität", d. h. die Fähigkeit des LANs mit der Zunahme der Stationen mitwachsen zu können, wird auf preiswertere Art Rechnung getragen: Hat man ein Netz mit z. B. nur 8 Stationen, wird man entsprechend dem oben erläuterten Konzept diese 8 Stationen mit einem passiven symmetrischen Sternkoppler verbinden.

Wächst die Stationszahl z. B. auf 16 an, so wird man nach dem Konzept die 2. Gruppe der hinzugekommenen 8 Stationen ebenfalls durch einen passiven symmetrischen Sternkoppler verbinden. Die nun bestehenden Subnetze legt man mit einem unsymmetrischen aktiven Sternkoppler zusammen. Es muss daher nicht ein zuvor angeschaffter und kostspieliger Sternkoppler (Splitter/Combiner) aus dem Netzwerk entfernt und ausrangiert werden, wie es beim oben beschriebenen ersten Netztyp der Fall ist.

Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen

Fig. 1     einen aktiven, unsymmetrischen Sternkoppler im Schema,

Fig. 2     ein Schaltbild eines Netzes mit Stationen und passiven symmetrischen Sternkopplern sowie aktiven, unsymmetrischen Sternkopplern.

Ein aktiver unsymmetrischer Sternkoppler 1 enthält Tore 2, 3, 4 und 5. Es können auch mehr Tore vorhanden sein. Jedes Tor 2 bis 5 weist einen an einen Lichtwellenleiter 6 angeschlossenen Sender und einan an einen Lichtwellenleiter 8 angeschlossenen Empfänger 9 auf. Dem Sender 7 ist ein mit R bezeichneter Regenerator vorgeschaltet, der von einem ODER-Glied gespeist wird. Es sind, der Anzahl der Tore entsprechend, vier ODER-Glieder 10, 11, 12, 13 vorgesehen. Die Eingänge der ODER-Glieder 10 bis 13 sind jeweils so mit Regeneratoren R verbunden, dass keine Verbindung vom Sender zum Empfänger des gleichen Tores vorhanden ist.

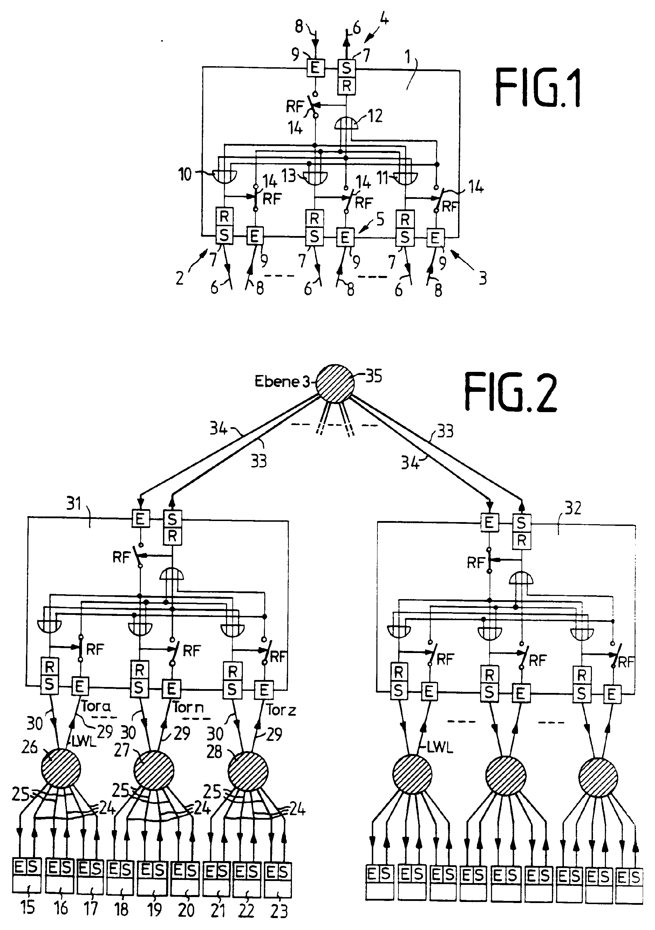

Die in Fig. 1 dargestellte Anordnung arbeitet wie folgt: Es sei angenommen, dass im Anschluss an eine Sendepause - ein Signal, das Daten beinhaltet, in den Empfänger 9 des Tors 2 einläuft. Der Sternkoppler 1 besitzt die Eigenschaft, dass die Daten nicht unmittelbar auf den Sender 7 des Tors 2 übergekoppelt werden. Weiterhin besitzt der Sternkoppler 1 die Eigenschaft, dass der Datenstrom des Signals, der in die Sender 7 aller anderen Tore 3, 4, 5 übertragen wird, Rückflusssperren, nämlich Schaltelemente 14, betätigt, die den Empfängern 9 nachgeschaltet sind. Die Schaltelemente werden von dem jeweils dem Sender 7 zugeführten Signal oder einem Steuersignal, das mindestens für die Dauer des Datenstroms erzeugt wird, geöffnet.

Der in Fig. 1 dargestellte Regenerator (Repeater R) ist auf der einen Seite nur optional vorgesehen, auf der anderen Seite soll er, falls er eingebaut wird, nicht - wie dargestellt - für jedes Tor einzeln implementiert werden, vielmehr kann die Regeneration auch in einem zentralen Baustein für alle Tore gemeinsam erfolgen. Das Symbol R soll im Bild lediglich darauf hinweisen, dass es sich um - gegebenenfalls - regenerierte Ausgangssignale handelt.

Das Prinzip eines Netzaufbaus zeigt Fig. 2. Das in Fig. 2 dargestellte Netz enthält Stationen von denen nur einige mit 15, 16, 17, 18, 19, 20 und 21, 22, 23 bezeichnet sind. Jede Station z. B. 15 bis 23 enthält einen mit S bezeichneten Sender und einen mit E bezeichneten Empfänger, die beide am Lichtwellenleiter angeschlossen sind, die bei allen Stationen mit 24, 25 bezeichnet sind.

In einer ersten Netzebene sind symmetrische, passive Sternkoppler 26, 27, 28 je an drei Stationen 15, 16, 17 bzw. 18, 19, 20 bzw. 21, 22, 23 angeschlossen. Die Gruppen der Stationen 15, 16, 17 bzw. 18, 19, 20 bzw. 21, 22, 23 bilden jeweils ein Cluster.

Von den Sternkopplern 26, 27, 28 verlaufen jeweils gleich bezeichnete Lichtwellenleiter 29, 30, von denen einer für die Senderichtung, der andere für die Empfangsrichtung bestimmt ist, zu einem aktiven unsymmetrischen Sternkoppler 30, der den in Fig. 1 dargestellten Aufbau hat. Ein zweiter aktiver Sternkoppler 32 hat den in Fig. 1 dargestellten Aufbau. Dem aktiven, unsymmetrischen Sternkoppler 32 sind in gleicher Weise wie dem Sternkoppler 31 nicht näher bezeichnete passive, symmetrische Sternkoppler nachgeordnet, die wiederum mit nicht näher bezeichneten Stationen verbunden sind. Es sind jeweils 3 Stationen pro passivem Sternkoppler dargestellt, jedoch könen auch mehr oder weniger Stationen vorgesehen sein. Bei den passiven Sternkopplern 26 bis 28 handelt es sich um kommerziell verfügbare optische Bausteine.

Die Sternkoppler 31, 32 sind je über zwei Lichtwellenleiter 33, 34 mit einem weiteren passiven, symmetrischen Sternkoppler 35 verbunden, der in der dritten Netzebene angeordnet ist. Die Sternkoppler 31, 32 befinden sich in der zweiten Netzebene.

Wenn z. B. die Station 15 einen Datenstrom sendet, gelangt dieser über den Sternkoppler 26 zu den Stationen 16, 17. Zu den Stationen 18 bis 22 gelangt der Datenstrom über den Sternkoppler 31. Die an den Sternkoppler 32 angeschlossenen Stationen erhalten über den Sternkoppler 35 den Datenstrom.

Wesentlich ist, dass die gruppenweise Zusammenfassung von Stationen entweder durch passive symmetrische oder aktive unsymmetrische Sternkoppler mit Rückflusssperre vorgenommen wird, und zwar in der Art, dass ein Signal, das in einer unteren Ebene der Netzhierarchie kommend den nächst höheren Sternkoppler erreicht, unmittelbar durch eben diesen Sternkoppler auch zu den Stationen oder Subnetzen der genannten unteren Ebene zurückgeleitet wird, also nicht nur zu einer höheren Hierarchieebene geleitet werden kann. Die Gefahr eines Rückflusses der Signalströme wird durch Rückflusssperren ausgeschlossen.

Die Rückflusssperre kann durch ein vom Beginn eines Signalstroms angestossenes Monoflop betätigt werden, dessen Ausgangssignal mindestens so lange dauert wie der Signalstrom und eine Zeit darüber hinaus. Diese Massnahme ist z. B. für Netze geeignet, in denen Signalströme, z. B. Telegramme, von gleicher Dauer übertragen werden. Falls verschieden lange Telegramme übertragen, können retriggerbare Monoflops verwendet werden.

Der Netzaufbau löst also das oben geschilderte Problem: Signalkreisströme werden verhindert, so dass jeder Empfänger ein ausgesandtes Telegramm in der Tat nur einmal erhält. Das in Fig. 2 dargestellte Netz eignet sich besonders für eine nach dem Token-Bus-Prinzip erfolgende Kommunikation.

## Patentansprüche

1. Sternförmiges Netz für die Informationsübertragung zwischen Stationen (15, 16, 17, 18, 19, 20, 21, 22, 23), wobei an Verzweigungsstellen des Netzes Sternkoppler vorgesehen sind,
   **dadurch gekennzeichnet,**
   dass das Netz hierarchisch in verschiedene Ebenen gegliedert ist, die durch gruppenweise Zusammenfassung einzelner Stationen oder Subnetze wechselweise mit symmetrischen passiven und unsymmetrischen aktiven Sternkopplern gebildet werden, dass in der unteren Ebene passive, symmetrische Sternkoppler (26, 27, 28) vorgesehen sind, denen die Stationen (15, 16, 17, 18, 19, 20, 21, 22, 23) nachgeschaltet sind, dass jeder aktive Sternkoppler (1) Tore (2, 3, 4, 5) mit je einem Empfänger (9) und einem Sender (7) aufweist, dass bei jedem Tor des aktiven Sternkopplers (1) dem Empfänger (9) ein Schaltelement (14) nachgeschaltet ist, das durch dem Sender (7) des Tors (2, 3, 4, 5) zugeführte Signale nichtleitend steuerbar ist, und dass bei jedem Tor (2, 3, 4, 5) des aktiven Sternkopplers (1) der Empfänger (9) nur mit den Sendern der anderen Tore verbunden ist.

2. Netz nach Anspruch 1,
   **dadurch gekennzeichnet,**
   dass an die Sender (7) und Empfänger (9) Lichtwellenleiter (6, 8) angeschlossen sind.

3. Netz nach Anspruch 2,
   **dadurch gekennzeichnet,**
   dass den Sendern (7) Regeneratoren vorgeschaltet sind.

4. Netz nach Anspruch 1 oder 2,
   **dadurch gekennzeichnet,**
   dass für alle Tore ein gemeinsamer Regenerator vorgesehen ist, der in ODER-Verknüpfung mit allen auszusendenden Signalen des Sternkopplers beaufschlagbar ist.

**5.** Netz nach Anspruch 1 oder einem der folgenden Ansprüche,
**dadurch gekennzeichnet,**
dass im Netz Telegramme mit bestimmter Dauer übertragen werden und dass im aktiven, unsymmetrischen Sternkoppler die Schaltelemente der Tore, deren Sender von einem Empfänger mit einem zu sendenden Telegramm beaufschlagt werden, von den Sendern durch ein zu Beginn des Telegramms angestossenes Monoflop für eine Zeitdauer nichtleitend gesteuert werden, die zumindest die Dauer des Telegramms und eine zusätzliche Dauer umfasst.

**6.** Netz nach Anspruch 1 oder einem der folgenden Ansprüche,
**dadurch gekennzeichnet,**
dass im Netz die Kommunikation nach dem Token-Bus-Zugriffsprinzip erfolgt.

## Claims

**1.** Star-shaped network for data transmission between stations (15, 16, 17, 18, 19, 20, 21, 22, 23), wherein star connectors are provided at nodes of the network, characterised thereby that the network is hierarchically ordered in different planes which are formed by combination in groups of individual stations or subnetworks alternately with symmetrical passive and asymmetrical active star connectors, that passive symmetrical star connectors (26, 27, 28), behind which are connected the stations (15, 16, 17, 18, 19, 20, 21, 22, 23), are provided in the lower plane, that each active star connector (1) comprises gates (2, 3, 4, 5) each with a respective receiver (9) and respective transmitter (7), that a switching element (14), which is controllable by signals fed to the transmitter (7) of the gate (2, 3, 4, 5) to be non-conducting, is connected behind the receiver (9) at each gate of the active star connector (1), and that at each gate (2, 3, 4, 5) of the active star connector (1) the receiver (9) is connected only with the transmitters of the other gates.

**2.** Network according to claim 1, characterised thereby that optical conductors (6, 8) are connected to the transmitter (7) and receiver (9).

**3.** Network according to claim 2, characterised thereby that regenerators are connected in front of the transmitters (7).

**4.** Network according to claim 1 or 2, characterised thereby that a common regenerator, which can be acted on in OR linking by all control signals, to be transmitted, of the star connector, is provided for all gates.

**5.** Network according to claim 1 or one of the following claims, characterised thereby that telegrams with defined duration are transmitted within the network and that in the active asymmetrical star connector the switching elements of the gates, of which the transmitters are acted on by a receiver with a telegram to be transmitted, are controlled to be non-conducting by the transmitters through a monoflop, which is triggered at the start of a telegram, for a time period which comprises at least the duration of the telegram and an additional period.

**6.** Network according to claim 1 or one of the following claims, characterised thereby that communication takes place in the network according to the token bus access principle.

## Revendications

**1.** Réseau en étoile pour la transmission d'informations entre des stations (15, 16, 17, 18, 19, 20, 21, 22, 23), des coupleurs en étoile étant prévus aux points de ramification du réseau, caractérisé en ce que le réseau est subdivisé hiérarchiquement en différents plans, qui sont formés par réunion en groupes de stations individuelles ou de sous-réseaux alternativement avec des coupleurs en étoile passifs symétriques et des coupleurs en étoile actifs non symétriques, en ce que dans le plan inférieur il est prévu des coupleurs en étoile (26, 27, 28) passifs, symétriques en aval desquels sont montés les stations (15, 16, 17, 18, 19, 20, 21, 22, 23), en ce que chaque coupleur en étoile (1) actif comporte des portes (2, 3, 4, 5) avec chacune un récepteur (9) et un émetteur (7), en ce que pour chaque porte du coupleur en étoile (1) actif il est monté en aval du récepteur (9) un élément de commutation (14) qui peut être commandé de manière non conductrice par des signaux envoyés à l'émetteur (7) de la porte (2, 3, 4, 5), et en ce que pour chaque porte (2, 3, 4, 5) du coupleur en étoile (1) actif, le récepteur (9) n'est relié qu'avec les émetteurs des autres portes.

2.  Réseau selon la revendication 1, caractérisé en ce qu'aux émetteurs (7) et récepteurs (9) sont connectés des guides d'ondes lumineuses (6, 8).

3.  Réseau selon la revendication 2, caractérisé en ce que des régénérateurs sont montés en amont des émetteurs (7).

4.  Réseau selon la revendication 1 ou 2, caractérisé en ce qu'il est prévu, pour toutes les portes, un régénérateur commun qui peut recevoir, dans un circuit logique OU, tous les signaux à émettre du coupleur en étoile.

5.  Réseau selon la revendication 1 ou l'une des revendications suivantes, caractérisé en ce que dans le réseau sont transmis des télégrammes de durée déterminée et en ce que dans le coupleur en étoile actif, non symétrique, les éléments de commutation des portes, dont les émetteurs reçoivent d'un récepteur un télégramme à émettre, sont commandés de manière non conductrice par les émetteurs, par l'intermédiaire d'une bascule monostable déclenchée au début du télégramme, pour une durée qui comprend la durée du télégramme et une durée supplémentaire.

6.  Réseau selon la revendication 1 ou l'une des revendications suivantes, caractérisé en ce que dans le réseau la communication s'effectue suivant le principe d'accès par token-bus.

FIG.1

FIG.2